# EUROPEAN PATENT APPLICATION

(11) **EP 2 450 626 A2**
(43) Date of publication of application: **09.05.2012**
(21) Application number: 11185184.6
(22) Date of filing: 14.10.2011
(51) Int. Cl.: F21V 17/02, G02B 6/00, F21Y 105/00

(54) **Surface light source assembly**

(30) Priority: 18.10.2010 JP 2010233273; 10.08.2011 JP 2011174683
(71) Applicant: Meitaku Industry Co., Ltd., Otsu-shi Shiga 520-0043 (JP)
(72) Inventor: Hirokazu, Matsui, Otsu-shi, Shiga 520-0043 (JP)
(74) Representative: Loyer & Abello

(57) **Abstract**

A surface light source assembly is disclosed. The surface light source assembly includes a light guide plate (1), a reflective sheet (2), a light diffuser sheet (3) and a transparent cover (4) arranged in front of the light diffuser sheet (3), an insert-nut (81) embedded in the light guide plate (1), and a supporting frame (5) having a vertical plate (52) and a screw movable hole (53) arranged on the vertical plate (52). In the insert-nut (81), a screw (8) is screwed from an end holding frame (7) overlapped on both ends of the supporting frame (5) and arranged in both ends of the light guide plate (1) via the screw movable hole (53). The screw (8) can be moved in the screw movable hole (53) depending on a heat expansion and contraction of the light guide plate (1).

## Description

### CROSS REFRENCE TO RELATED APPLICATION

This application claims priority of Japan Patent Application No.2011-174683 and the full content of that application is incorporated by reference.

### TECHNICAL FIELD

The present invention relates to a lighting equipment in which a incident light of LED light source is illuminated by a light guide plate, and more particularly to a surface light source assembly used for a display or a signboard in which a light transmission medium such as a positive film arranged between the light guide plate and a transparent cover is illuminated from backward by the incident light from the LED light source via the light guide plate.

### BACKGROUND OF THE INVENTION

In this type of the surface light source assembly , the light guide plate made of synthetic resin may expand or contract due to heat from the LED light source when the large LED light source is used so as to illuminate with high brightness. Furthermore, when the surface light source assembly is located at a high-temperature place or a high-humidity place, the light guide plate made of the synthetic resin is liable to expand and contract. More specifically, for example, when the surface light source assembly is located at a place where the light guide plate is exposed outdoors facing the south and receiving the direct sun light, the light guide plate made of synthetic resin is liable to expand by the heat. For this reason, the inventor of the present application proposed a surface light source assembly in Japanese Patent Application 2009-249143. The surface light source assembly includes a base plate on which a reflective plate, a light guide plate, a light diffuser sheet, a transparent cover, and a supporting frame are laminated. The supporting frame includes a light source holder which receives a LED light source and a vertical plate which extends from the light source holder along a back surface of the base plate. A pair of the vertical plates are arranged opposite to each other, and are respectively formed in a L-shape. In the vertical plate, a screw movable hole is arranged. The transparent cover is supported by a frame formed into a U-shape in a cross-section. An end rear surface of the frame is partially overlapped on the vertical plate of the supporting frame, and is firmly fixed to the supporting frame with a screw or bolt screwed into the light guide plate via the screw movable hole from the supporting frame.

In this case, it is possible to provide the surface light source assembly configured to surely prevent a trouble caused by heat expansion and contraction without causing the decrease of illumination brightness while using the light guide plate made of synthetic resin in which the heat expansion or constriction is inevitable. However, the surface light source assembly described above has a certain thickness even if the surface light source assembly can be thin due to the lamination of the reflective plate, the light guide plate, the transparent cover and the like on the base plate.

Accordingly, an object of the present invention is to provide a surface light source assembly which can significantly reduce the thickness thereof as thin as possible and can be suitable for use in the surface light source assembly while maintaining the lighting function and the heat expansion and contraction function.

### SUMMARY OF THE INVENTION

In order to attain the above object, the present invention provides a surface light source assembly which includes a light guide plate made of synthetic resin having a reflective plate or sheet which is overlapped on a rear surface of the light guide plate, a supporting frame having a light source holder receiving a LED light source and a vertical plate extending vertically from the light source holder along a rear surface of the reflective plate formed into a L-shape or U-shape in a cross-section, and a screw movable hole arranged in the supporting frame for absorbing heat expansion and contraction of the light guide plate. In the surface light source assembly of the present invention, the heat expansion and contraction of the light guide plate is absorbed by a screw or a bolt screwed into the light guide plate via the screw movable hole, and the screw movable hole is arranged in the vertical plate of the supporting frame.

In a second aspect of the surface light source assembly of the present invention, the surface light source assembly includes a light diffuser plate or sheet for diffusing outgoing light from the light guide plate overlapped on a front surface of the light guide plate. The surface light source assembly is provided with an insert-nut arranged in the light guide plate, and the screw or bolt is screwed into the insert-nut via the screw movable hole from the vertical plate of the supporting frame.

The surface light source assembly further includes a transparent cover overlapped on a front surface of the light diffuser plate or sheet, and the transparent cover is held by an end holding frame in which a longitudinal end portion is overlapped on the vertical plate of the supporting frame, and is integrally fixed to the supporting frame with the screw or bolt screwed into the light guide plate. The end holding frame is integrally formed into a U-shape in a cross-section, and at least a front surface of the end holding frame and the front surface facing the transparent cover are made of transparent synthetic resin.

According to the present invention, the light guide plate is used as a base plate on which various elements or members of the surface light source assembly are overlapped. Namely, the reflective plate is overlapped on the rear surface of the light guide plate, and the screw movable hole for absorbing the heat expansion and contraction is arranged in the vertical plate of the supporting frame. Further, the reflective plate is fixed to the light guide plate by screwing the screw or bolt into the light guide plate via the screw movable hole. Thus, the surface light source assembly of the present invention is thin and simple in construction. Further, the surface light source assembly of the present invention can be applied to various types of surface light source equipments, such as, a display, a signboard or the like and maintaining the heat expansion and contraction functions of the light guide plate. The assembly of the present invention is thinner than the conventional surface light source assembly.

According to the present invention, the light diffuser plate or sheet which diffuse outgoing light from the light guide plate is arranged so as to prevent a light guiding pattern of the light guide plate from viewing from the front surface of the surface light source assembly and give rise to uniform emission from the surface light source assembly. The light guide plate and the reflective plate or sheet are fixed by screwing the screw or bolt into the light guide plate from the vertical plate of the supporting frame toward the insert-nut arranged in the light guide plate. Thus the light guide plate and the reflective plate or sheet can be securely and firmly fixed accommodating the heat expansion and contraction of the light guide plate. In addition, the transparent cover is overlapped on the top surface of the light guide plate. Further, the end holding frame is arranged at upper and lower and right and left edges of the surface light source assembly crossing with the supporting frame so as to hold the transparent cover, which permits installation or change of light transparent medium such as a positive film easily perform by removing the transparent cover. Although the end holding frame is used in the surface light source assembly, the effective lighting surface of the light source assembly can be wide without narrowing the light surface of the light source by the end holding frame.

These and other objects, features, and advantages of the present invention will become more apparent upon reading of the following detailed description along with the accompanied drawings.

### BRIEF DESCRIPTION OF THE DRAWINGS

FIG. 1 is a front view of a surface light source assembly;
FIG. 2 is a back view of the surface light source assembly;

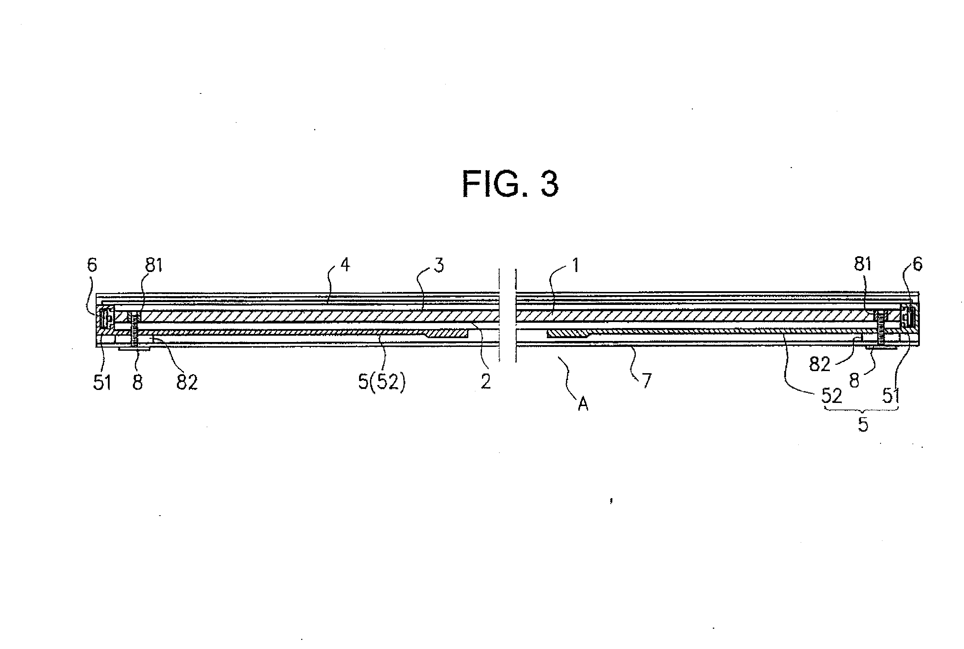

FIG. 3 is a transverse cross-sectional view of the surface light source assembly;
FIG. 4 is a partly enlarged view of FIG. 3;
FIG. 5 is a partly enlarged front view of a vertical plate; and
FIG. 6 is a partly perspective view showing a relation between a light guide plate and a screw.

### DESCRIPTION OF THE PREFERRED EMBODIMENTS

A surface light source assembly according to an embodiment of the present invention will be explained with reference to the drawings. The surface light source assembly A absorbs a heat expansion and contraction of a light guide plate 1 made of synthetic resin by a screw or bolt 8 screwed into the light guide plate 1 through a screw movable hole 53 of the light guide plate 1. The screw movable hole 53 is arranged on a supporting frame 5 to absorb the heat expansion and contraction of the light guide plate 1 made of the synthetic resin resulted from LED light sources used in the surface light source assembly effectively and properly. For example, the heat expansion and contraction of the light guide plate 1 generated in a place where it is subjected to the temperature of 70° or more by the LED light source or a high temperature inside of a house facing the south or outside of a house where it is subjected to direct sunlight is effectively and properly absorbed. The generation of the heat expansion and contraction in the light guide plate prevents defect of illumination from producing, such as, for example, a short circuit of electric wirings, a damage connector portions and so on due to tension force exerted on the electric wirings.

In an embodiment of the present invention, the surface light source assembly A comprises a reflective sheet 2 or plate which is overlapped on a back side of the light guide plate 1 as a base plate of laminating members, and a supporting frame 5 having a light source holder 51 and a vertical plate 52. The supporting frame 5 is formed with a L-shape or U-shape in a cross section, and a LED light source is placed in the light source holder. In the embodiment, the L-shaped vertical plate 52 extends integrally from the light source holder 51 along the back side of the reflective sheet 2, and the screw movable idle hole 53 is arranged in the vertical plate 52 of the supporting frame 5.

Further, a light diffuser sheet 3 or a light diffuser plate which diffuses outgoing light from the light guide plate 1 is provided so as to overlap a front surface of the light guide plate 1, and a transparent cover 4 is provided so as to overlap a front surface of the light diffuser sheet 3. The transparent cover 4 is held by end frames 7 in which longitudinal ends of the transparent cover 4 are overlapped on the vertical plate 52 of the supporting frame 5, and is integrally fixed to the supporting frame 5 with the screw penetrating into the light guide plate 1. The surface light source assembly A constructed as described above is used, for example, for a display or signboard.

A heat expansion coefficient of the light guide plate 1 in this embodiment is 6.8 x 10⁻⁵/K. The light guide plate 1 is formed with several mm, for example, 3 to 5 mm in thickness and is made of a vertically long acrylic transparent resin plate like 1 x 2 m. A printed or molded light guiding pattern (not shown) is disposed on a rear surface of the light guide plate 1. In this embodiment, the guiding pattern changes in pattern density from the incident end faces 11 toward the middle position of the light guide plate 1 on the premise that the LED light sources are arranged both right and left of the incident end faces 11 of the light guide plate 1 so that the incident light from the incident end faces 11 is guided toward the middle position, and the illumination of the guided light substantially becomes uniform over the surface light source assembly. Furthermore, the upper and the lower end surfaces of the light guide plate is formed to have reflecting end mirror surface so as to effectively prevent loss of incident light due to emission of the incident light from the light guide plate 1.

The reflective sheet 2, the light diffuser sheet 3 and the transparent cover 4 are laminated on the light guide plate 1 to form a substrate or base plate and are integrated by the screw 8. According to the present invention, the light guide plate 1 of the surface light source assembly A functions as a base plate, and has at least about 1 to 2 mm-thick. The surface light source assembly A is formed as thin as possible, for example, about 15mm in thickness without using the base plate made of metal or synthetic resin increasing the thickness of the surface light source assembly.

The light guide plate 1 includes a female screw for the screw 8. The female screw is an insert-nut 81, and the insert-nut 81 is arranged in four places near a corner of the light guide plate 1. The length of the insert-nut 81 is less or equal to the thickness of the light guide plate 1. The length of the insert-nut 81 is formed with 3mm in thickness which is equal to the thickness of the light guide plate 1.

The reflective sheet 2 is overlapped on a rear wall of the light guide plate 1. The reflective sheet 2 is formed with approximately 0.2 mm in thickness, and has the same size as the light guide plate 1. Further, the reflective sheet 2 is made of white synthetic resin having high reflectivity, for example, polyester series.

The light diffuser sheet 3 is overlapped on a front wall of the light guide plate 1. In the same manner as the reflective sheet 2, the light diffuser sheet 3 is formed with approximately 0.2 mm in thickness, and has the same size as the light guide plate 1. Further, the light diffuser sheet 3 is made of transparent synthetic resin or semi-transparent synthetic resin having light diffusion function, for example, polyester series. Further, the light diffuser sheet 3 is fixed to the light guide plate by a pressure-sensitive adhesive double coated tape or adhesive bond.

The transparent cover 4 is overlapped on the front wall of the light guide plate 1 above the light diffuser sheet 3. The transparent cover 4 is, for example, 0.5 to 2 mm-thick, the transparent cover having 1 mm-thick is used in this embodiment which is the same size as the light guide plate 1. Further, the transparent cover 4 is made of transparent synthetic resin having high transmittance.

The total thickness of the light guide plate 1, the reflective sheet 2, the light diffuser sheet 3 and the transparent cover 4 is 3.4 mm with less than 4 mm, and the supporting frame 5 and the end holding frame 7 are arranged so that the transparent cover 4 may be removable. The light guide plate 1, the reflective sheet 2 and the light diffuser sheet 3 are head by the screw or bolt 8 entering into the insert-nut 81 arranged in the light guide plate 1 from the end holding frame 7 and the vertical plate 5 of the supporting frame 5, and the transparent cover 4 is held on the end holding frame 7 by the screw 8 or bolt. The end holding frame 7 of upper side or lower side of the surface light source assembly can be removed by loosing the screw 8 or bolt so that the transparent cover 4 can be detached so as to replace a transparent medium such as a positive film.

The supporting frame 5 includes the light source holder 51 and the vertical plate 52. The light source holder 51 receives a LED light source, namely a high-intensity LED unit 6 in this embodiment, and supplies incident light of the LED unit 6 from an open groove to the incident end face 11 of the light guide plate 1. The light source holder 51 is formed in the C-shape in a cross section, and the supporting frame 5 is formed in the L-shape in a cross section extending the vertical plate 52 from the rear wall of the light source holder 51. Further, a pair of the light source holders 51 are arranged in both ends of the light guide plate 1 so that the light guide plate 1 is sandwiched and opposed with the pair of the light source holders 51. Further, the supporting frame 5 is integrally formed by extrusion molding of synthetic resin or aluminum. The front and the rear width of the light source holder 51 of the supporting frame 5 is less than or equal to 1 cm in the supporting frame 5, and the left and right width of the light source holder 51 is less than or equal to 1 cm. In a preferred embodiment of the present invention, the front and the rear width of the light source holder 51 is about 8 mm, and the left and the right width of the light source is about 4 mm. Further, the left and right width of the vertical plate 52 including the light source holder 51 is about 10 cm.

In the vertical plate 52, the screw movable hole 53 for absorbing the heat expansion and contraction of the light guide plate is formed on the vertical plate 52 so that the screw or bolt 8 for fixing the light guide plate 1 can move in the direction of the heat expansion and contraction of the light guide plate 1. According to an embodiment of the present invention, the screw movable idle hole 53 is oval in shape located in the direction of the heat expansion and contraction of the light guide plate. The oval hole is located in each vertical plate so that it is positioned at four corners of the surface light source assembly A. In the light guide plate of 1m wide× 2m long, the screw movable hole 53 is arranged in the light guide plate 1 at an angle of about 60° to 65°, preferably 63.5°. A width of the screw movable hole 53 is slightly larger than a diameter of the screw or bolt so that the screw or bolt 8 can be moveable without fail in response to the heat expansion and contraction of the light guide plate 1. The screw movable hole 53 is positioned near the corner of the vertical plate 52, and is inclined at the angle explained hereinabove on a diagonal line of the vertical plate 52 extending outwardly along the inner surface of the vertical plate 52.

The end holding frame 7 is integrally formed into a U-shape in a cross-section, and includes base walls, side walls and a receiving groove for receiving the light guide plate 1, the reflective sheet 2, the light diffuser sheet 3 and the transparent cover 4 between the base walls. The front surface of the end holding frame 7 facing the transparent cover 4 side is made of transparent synthetic resin. The end holding frame 7 is perpendicular to the end portion of the supporting frame 5, and is overlapped thereon so that a pair of the base walls of the end holding frame 7 are arranged in both ends of the light guide plate 1. The end holding frame 7 is integrally formed by an extrusion molding. More specifically, the base walls and the side walls are made of transparent synthetic resin having high light transmission such as an acrylic resin or a polycarbonate resin. The end holding frame 7 includes a through hole for inserting the screw or bolt. In this embodiment, an idle hole is arranged. Accordingly, even if the end holding frames 7 are arranged on both end of the surface light source assembly portions, the effective surface area of illumination in the transparent cover is avoided from narrowing by the end holding frame 7. The width and the height of the end holding frame 7 are about 1.5 cm, respectively.

According to the embodiment of the present invention, the light guide plate 1, the reflective sheet 2 and the light diffuser sheet 3 are arranged to be laminated one after another. More specifically, the light guide plate 1 is used as a base plate, the reflective sheet 2 is arranged on the real wall of the light guide plate 1, and the light diffuser sheet 3 is arranged on the front wall of the light guide plate 1. That is, the light guide plate 1 is positioned between the reflective sheet 2 and the light diffuser sheet 3, and the reflective sheet 2 and the light diffuser sheet 3 are overlapped on the light guide plate 1. The supporting frame 5 is arranged so that light exit holes of the supporting frame may be directed to the right and left incident end faces 11 of the light guide plate 1.The back surface of the reflective sheet 2 is covered with the vertical plate 5 of the supporting frame 5. Further, the transparent cover 4 is arranged on the front surface of light diffuser sheet 3 to be overlapped on the light guide plate 1. The transparent cover 4 is held by the end holding frame 7 which is arranged so as to cover upper and lower ends of the supporting frame 5 and upper and lower longitudinal ends of the transparent cover 4.

According to the present invention, the end holding frame 7 is held by the screw 8 or the bolt which penetrates into the insert-nut 81 of the light guide plate 1 from a through hole arranged in a position partially overlapping with the edge of the supporting frame 5 of both upper and lower edges of the end holding frame 7 via the screw movable hole 53 of the vertical plate 52 of the supporting frame 5 and the through-hole of the reflective sheet 2. In this manner, the reflective sheet 2, the supporting frame 5 which is disposed on both end surfaces of the light diffuser sheet 3 and the end holding frame 7 are integrally fixed by the four screws or bolts, and the transparent cover 4 positioned in the top surface is held by the end holding frame 7. The surface light source assembly A of the present invention is constructed as described above.

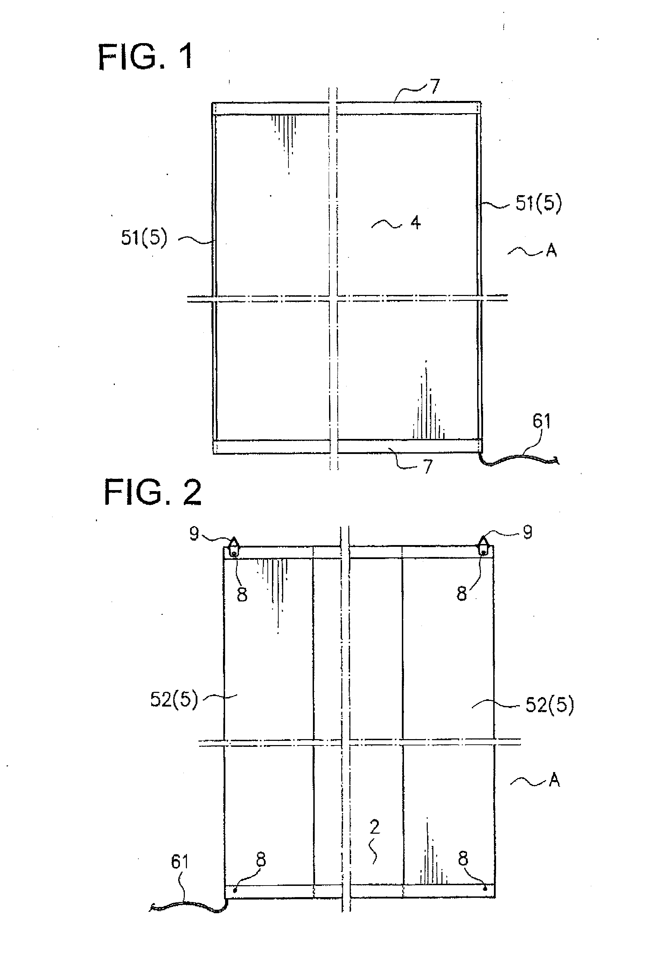

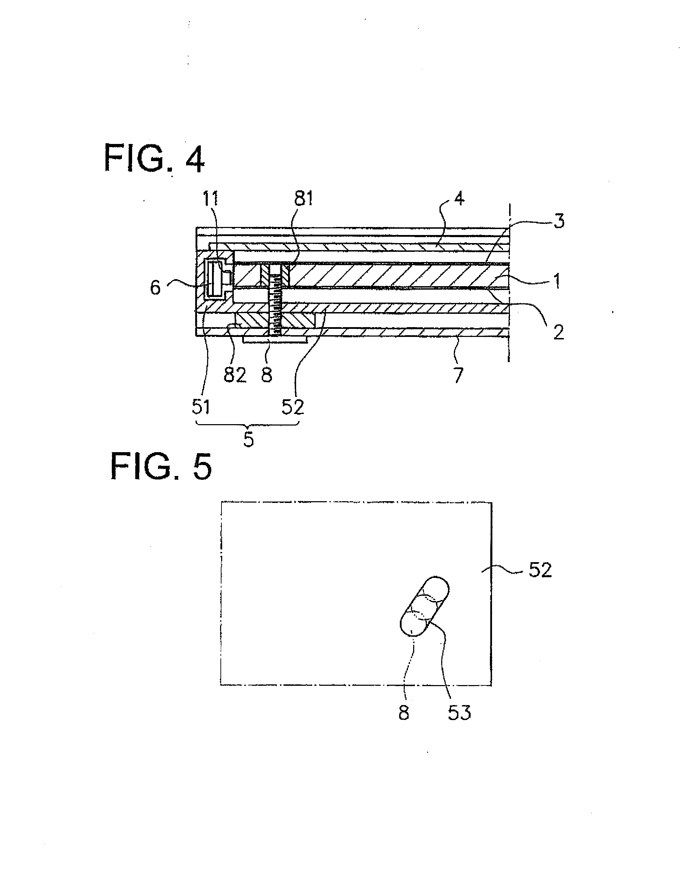

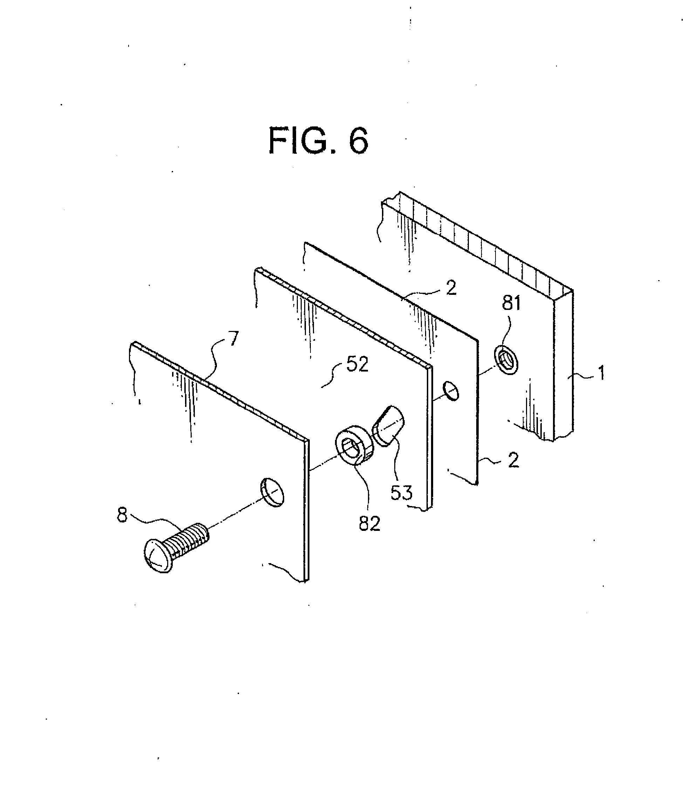

The reference numeral 61 in FIGs. 1 and 2 is a power source connecting cord of the LED unit 6, the reference numeral 82 in FIGs. 2, 4 and 6 is a washer arranged between the supporting frame 5 and the end holding frame 7, and the reference numeral 9 in FIG. 2 is a hanging hook used to support the surface light source assembly A.

In the surface light source assembly A of the present invention, the transparent cover 4 held by the end holding frame 7 can be removed if the two screws or bolts 8 arranged on either upper or lower end of the transparent cover 4 is unscrewed to permit the end holding frame 7 to remove. if the transparent cover 4 is removed from the surface light source assembly A, light transmission medium (not shown), such as, for example, a positive film as an object of the back lighting assembly can be replaced on the front of the light guide plate 1, namely, the front of the light diffuser sheet 3. In this instance, it is not necessary to remove the remaining one of the end holding frames 7 of the surface light source assembly A can be maintained not to be disassembled by the remaining one of end holding frames 7. Accordingly, the handy surface light source assembly A which is easy to use can be provided according to be present invention.

The surface light source assembly A according to be present invention is capable of minimizing the thickness as thin as about 15 mm contrary to the thickness of the conventional surface light source assembly. Further, although the surface light source assembly A can be located at a place which is high temperature or humidity outdoors facing the south and the direct sun light, the light guide plate 1 made of synthetic resin is expanded or contracted by heat, and the screw or bolt 8 penetrating into the light guide plate 1 moves along the screw movable hole 53 of the supporting frame 5 which is slanted in the directing of the heat expansion and contraction of the light guide plate. As a result, the heat expansion and contraction of the light guide plate 1 is absorbed, and positional relationship between the light guide plate 1 and the supporting frame 5 fixing the light guide plate 1 remains unchanged. Thus, the constituent elements of the surface light source assembly A can be prevented from being subjected to excessive do external force. Furthermore, the surface light source assembly A is capable of back lighting for a long period of term without any trouble, for example, the LED unit 6 is not lighted by disconnection due to an action of the external force.

For example, the surface light source assembly A explained hereinabove is directed to the back lighting for use, such as, in a display or signboard. It is to be understood that the surface light source assembly in the present invention can be used as a lighting equipment in the shape of a plate for a surface light source assembly other than the back lighting device. The surface light source assembly as a light source absorbs the heat expansion and contraction of the light guide plate made of synthetic resin with the screw or the bolt which is driven into the light guide plate via the screw movable hole arranged in the supporting frame and located along the direction of the heat expansion and contraction of the light guide plate. The light guide plate is used as a base plate in which the constituent elements of the surface light source assembly are overlapped. The reflective plate or the reflective sheet is overlapped on the rear surface of the light guide plate.
The supporting frame includes the light source holder receiving the LED light source and the vertical plate extending from the light source holder along the rear surface of the reflective plate, and is formed into a L-shape or U-shape in a cross-section. Further, the oval hole is arranged on the vertical plate of the supporting frame. For example, the screw or bolt is screwed into the insert-nut arranged in the light guide plate via the screw movable hole of the vertical plate. Further, if necessary, the light diffuser plate or the light diffuser sheet for diffusing outgoing light from the light guide plate is overlapped on the front of the light guide plate to provide the surface light source assembly.

In order to fix the surface light source assembly of the present invention on a ceiling or wall, installation fittings are required. The surface light source assembly of the present invention comprises the light guide plate, the reflective plate or sheet and the supporting frame, if necessary, the light diffuse plate or sheet on the front surface of the light guide plate, preferably, the light diffuser plate, so that the significantly wide illuminating surface can be obtained. Furthermore, the surface light source assembly of the present invention is designed not to be damaged by the heat expansion or contraction of the light guide plate due to heat of the LED light source when the LED light source of high brightness is used. In the surface light source assembly having the reflective plate and the light diffuser plate, the reflective plate is made of a metal or a synthetic resin having light reflective property, and the light diffuser plate is made of a synthetic resin having light diffusing property. The reflective plate and the light diffuser plate can be formed with a thin plate. The lighting equipment formed in this way can be embedded in the ceiling and walls. For example, the lighting equipment can be embedded in a shelf of display racks and various locations for installation.

Various modifications of the surface light source assembly are possible. For example, shape, material, structure, positional relationship of the elements of the surface light source assembly, the light guide plate, the supporting plate, the light source holder, the vertical plate, the screw movable hole, the screw, the reflective plate or sheet, the LED light source, the light diffuse plate or sheet, the insert-nut, the transparent cover, the end holding frame, or the like can be modified when practicing the present invention without departing from the spirit and scope of the present invention. More specifically, the supporting frame may be formed into a U-shape in a cross-section by arranging the vertical plate opposite to the supporting frame. The vertical plate may be integrally arranged in the light source holder by fixing vertical plate to the light source holder in advance or later on. The end holding frame and the vertical plate are is integrally made from non-transparent synthetic resin or aluminum and is formed into a L-shape in a cross-section which is integrally arranged on the front of the end holding frame in the transparent cover side. The screw movable hole may be circular having a diameter which can absorb the heat expansion and contraction of the light guide plate. The screw movable hole can be made into various shapes like a rectangular shape.

while, an embodiment of the present invention is described, it will be understood that various change and modifications can be made without departing the scope of the present invention.

## Claims

1. A surface light source assembly comprising:
a light guide plate made of synthetic resin having a reflective plate or sheet on a rear surface of the light guide plate;
a supporting frame including a light source holder receiving a LED light source and a vertical plate extending vertically from the light source holder along a rear surface of the reflective plate formed into a L-shape or U-shape in a cross-section; and
a screw movable hole arranged in the supporting frame for absorbing heat expansion and contraction of the light guide plate,
wherein the heat expansion and contraction of the light guide plate is absorbed by a screw penetrating into the light guide plate via the screw movable hole,
wherein the screw movable hole is arranged in the vertical plate of the supporting frame.

2. The surface light source assembly as claimed in claim 1, wherein one of a light diffuser plate or sheet for diffusing outgoing light from the light guide plate is fixed to the light guide plate to be overlapped on a front surface of the light guide plate.

3. The surface light source assembly as claimed in claim 1 or 2, wherein an insert-nut is arranged in the light guide plate so that the screw is screwed into the insert-nut via the screw movable hole from the vertical plate of the supporting frame.

4. The surface light source assembly as claimed in claim 2, wherein a transparent cover is arranged to be overlapped on a front surface of the light diffuser plate or sheet,
wherein the transparent cover is held by an end of a holding frame in which the longitudinal end portion of the transparent cover is overlapped on the vertical plate of the supporting frame, and is integrally fixed to the supporting frame with the screw screwed into the light guide plate.

5. The surface light source assembly as claimed in claim 4, wherein the end holding frame is integrally formed into a U-shape in a cross-section, and at least a front surface of the end holding frame facing the transparent cover is made of transparent synthetic resin.
